# EUROPEAN PATENT APPLICATION

(11) **EP 4 456 014 A1**
(43) Date of publication of application: **30.10.2024**
(21) Application number: 23170870.2
(22) Date of filing: 28.04.2023
(51) Int. Cl.: G06V 20/50

(54) **METHOD TO OPERATE AN ADAPTIVE HEADLIGHT DEVICE OF A VEHICLE**

(71) Applicant: Valeo Internal Automotive Software Egypt, LLC, Giza, Cairo (EG)
(72) Inventor: Sobh, Ibrahim, Cairo (EG); Adel, Islam, Cairo (EG)
(74) Representative: Hofstetter, Schurack & Partner

(57) **Abstract**

The invention relates to a method to operate an adaptive headlight device (2) of a vehicle (1) comprising: providing an outside information (10) describing an environment (3) of the vehicle (1); providing a weather information (14) describing a weather condition in the environment (3); and providing a lighting information (15) describing a lighting condition in the environment (3). ). The method comprises determining (S4) a control command (20) for the headlight device (2) by applying an artificial neural network (24) on the provided outside information (10), weather information (14) and lighting information (15), so that the determined control command (20) describes at least one setting (21, 22) for the headlight device (2) by which light emitted by the headlight device (2) is adjusted to the environment (3), the weather condition and the lighting condition; and operating (S10) the headlight device (2) according to the determined control command (20).

## Description

The invention relates to a method to operate an adaptive headlight device for a vehicle. Besides, the invention relates to a vehicle, a headlight system, and a computer program product to perform such a method.

A vehicle may comprise a headlight device comprising at least one headlamp or headlight. The headlight device is configured to illuminate an environment of the vehicle, in particular the environment located in front of the vehicle in a forward direction of the vehicle. The headlight device may be adaptive so that, for example, a focus area and/or an intensity of light emitted by the headlight device is modifiable, in particular locally variable.

The adaptive headlight device may be operated under consideration of the environment. If there is, for example, an object in the environment, the intensity of the emitted light may be increased or decreased.

US 10,343,592 B2 discloses a system and method for vehicle headlight control. The method comprises detecting at least one object and determining an illumination level of the at least one object and a control setting to increase an illumination level of the at least one object.

US 2020/0001775 A1 discloses a method and an apparatus for controlling headlights of an autonomous vehicle. The method comprises detecting an object in a traveling path of the vehicle, sensing a light amount of the object, and adjusting brightness of the headlights in accordance with the light amount of the object.

To provide an adaptive headlight device that is particularly useful for a driver of the vehicle, more information about the environment should be considered when determining a control command for the headlight device.

It is the object of the invention to provide control commands for an adaptive headlight device of a vehicle, which are useful for a driver.

The independent claims solve the object.

A first aspect of the invention relates to a method to operate an adaptive headlight device of a vehicle. The adaptive headlight device comprises at least one headlight or headlamp of the vehicle. The headlight device is configured to emit light in direction of an environment of the vehicle, in particular the environment located in front of the vehicle in a forward direction of the vehicle.

The invention considers that traditionally the headlight device of a vehicle is passive and independent of a surrounding scenario in terms of road, other vehicles, pedestrians, traffic signs and/or other objects or obstacles in the environment. Furthermore, it does not consider influences on the surrounding scenario caused by lighting and weather. However, if the surrounding scenario and hence the environment of the vehicle as well as the lighting and the weather are considered, it is possible to adjust an illumination provided by the headlight device so that areas of relevance are particularly illuminated. This may be useful for the driver of the vehicle and may contribute to reduce disadvantages of not ideally illuminated and/or blind areas in the environment.

The method comprises providing an outside information. The outside information describes the environment of the vehicle. Preferably, it describes the environment of the vehicle located in front of the vehicle in forward direction of the vehicle. The environment may be a part of a 360-degreed environment of the vehicle. It may alternatively be referred to as a part or as a subpart of a total environment of the vehicle. The outside information may comprise at least one image of the environment. Preferably, the outside information is or comprises camera data.

The method also comprises providing a weather information. The weather information describes a weather condition and hence a weather in the environment. The weather information may differentiate, for example, between fog, rain, clear, sunny, snow, ice and/or another weather condition.

The method furthermore comprises providing a lighting information. The lighting information describes a lighting condition in the environment. The lighting condition depends on a presence or an absence of a light source to illuminate the environment. The light source may be a natural light source, such as the sun or the moon, and/or an artificial light source, such as the headlight device, a street lamp, an infrastructure light source and/or another vehicle. The lighting information may differentiate between day and night, in particular as well between dawn and/or dusk. Besides, it may differentiate between an environment that is always illuminated artificially, such as a tunnel or a garage, and an environment with an illumination depending on a time of day, such as an open-air area.

The method comprises determining a control command for the adaptive headlight device by applying an artificial neural network on the provided outside information, the provided weather information and the provided lighting information. As a result, the determined control command describes at least one setting for the headlight device by which light emitted by the headlight device is adjusted to the environment, the weather condition and the lighting condition. In an example, the vehicle is driving along a road in a foggy weather in the evening when it is already dark. Besides, in this example, a traffic sign is located on a side of the road. Then, the determined control command may comprise an increase in intensity of the light emitted by the headlight device in direction of the road due to the foggy weather. Moreover, it may comprise a focus area for the light that comprises the road and the traffic sign to improve visibility of the traffic sign for the driver of the vehicle.

The method comprises operating the headlight device according to the determined control command. Thus, the headlight device is controlled according to the determined control command. In the above-mentioned example, the headlight device changes an emitted light beam of the headlight device so that it covers the road ahead of the vehicle and the traffic sign. Besides, the intensity of the emitted light is particularly high because of the detected fog. By doing so, intuitive control of the headlight device that is reasonable for the driver and hence useful for the driver is provided. This also contributes to reduce threads of not ideal or bad lightning. Compared to a headlight device that does not consider the environment as well as weather and the lighting, the described method improves the operation of the headlight device. Hence, for operating the headlight device weather and lightning as well as the environment are considered to determine an optimized strategy for operating the headlight device.

The artificial neural network has been trained in advance by a neural network training procedure. Therefore, a standard supervised training way may be used. Preferably, an end-to-end training is performed, meaning that the artificial neural network is preferably trained by raw data alone, such as raw image data. The raw image data comprises, for example, images of typical environments of a vehicle. After or during the training procedure, the artificial neural network may create outputs which may be mapped to inputs and hence to the raw data..Besides, the trained artificial neural network is tested or evaluated. For the testing, test data may be provided to the artificial neural network. The test data may be different from the raw data used for training and hence from used training data. The test data may be referred to as evaluation data. Only if the evaluation of the artificial neural network is successful its generalization may be ensured. Then, the artificial neural network may be used when performing the method. The artificial neural network is hence trained for determining the control command.

A control device of the vehicle may perform the described method. The control device may be a part of the headlight device. The control device is, for example, a computer and/or a control unit, especially an electronic control unit of the vehicle. In addition, the following embodiments are performed with the control device, if possible.

An embodiment comprises that the determined control command describes a first setting by which a focus area of the light is adjusted. Alternatively or additionally, the determined control command describes a second setting by which an intensity of the light is adjusted. This means that the determined control command comprises instructions for the headlight device so that the headlight device sets and/or changes the area lighted by the headlight device and/or a brightness of the emitted light. Preferably, the determined control command describes settings, which are different from current and/or previous settings of the headlight device. The second setting may describe an intensity that varies locally. The intensity may be higher or lower than a current and/or previous intensity of the light. The focus area may be describes by a direction and an opening angle of the light beam emitted by the headlight device. The method hence allows focus control and headlight intensity control because of considering the environment, the weather and the lighting.

Another embodiment comprises that the artificial neural network is a convolutional neural network (CNN). The used algorithm is hence based on a deep learning model. The CNN is particularly suitable for analyzing visual data, such as images. Known CNN may be used. Therefore, the outside information is provided for and thus fed into the artificial neural network, in particular the CNN. Here, the artificial neural network may be configured to solve two tasks. One of them may be to determine the first setting and the other one may be to determine the second setting. This means that the artificial neural network is configured to determine the control command for the headlight device.

A preferred embodiment comprises that the artificial neural network comprises three separate input branches for feature extraction. The provided outside information is provided to or fed into a first input branch of the three input branches. The provided weather information is provided to or fed into a second input branch of the three input branches. The provided lighting information is provided to or fed into a third input branch of the three input branches. The used artificial neural network is here hence a multi-branch convolutional neural network, in particular a multi-branch CNN. The artificial neural network may therefore be based on a multi branch deep learning model. The artificial neural network is hence designed to process three different kinds of input data, which are the outside information, the weather information and the lighting information. This is a reasonable approach to determine the control command that is based on different input data.

Another embodiment comprises that the second input branch and/or the third input branch is fed with data determined by a further artificial neural network. The further artificial neural network is applied on the provided outside information and/or on a further sensor information to determine the weather information or the lighting information, respectively. This mean that there is, for example, a first further artificial neural network that is applied on the outside information and/or the further sensor information to determine the weather information. The output of the first further artificial neural network is the weather information that is then, for example, provided to the second input branch. Alternatively or additionally, second further artificial neural network is applied on the outside information and/or the further sensor information to determine the lighting information. The lighting information is hence the output of the second further artificial neural network. It is then provided to the third input branch. This means that, for example, up to two further artificial neural networks may be used in addition to a main artificial neural network. The main artificial neural network is the one that determined the control command and may comprise the three input branches as described above.

A reason for the further artificial neural network(s) is that the weather information as well as the lighting information are typically not captured by a sensor device of the vehicle but have to be calculated or determined. However, it is, for example, possible to use image data such as the outside information to determine the weather information and/or the lighting information. The results for these information are particularly reliable if machine learning methods are used and thus the further artificial neural network(s).

The outside information is here assumed to be or comprise at least one image of the environment. The further sensor information is, for example, determined by the sensor device of the vehicle and describes details regarding the weather and/or the lighting. Thus, the weather information as well as the lighting information can reliably be determined.

A further embodiment comprises that a rain sensor and/or a temperature sensor of the vehicle provides the further sensor information. The rain sensor and/or the temperature sensor may provide information described by the respective further sensor information to analyze the current weather, for example, to detect precipitation that may influence a sight range of the driver and/or to identify factors that may increase a possibility of fog.

Alternatively or additionally, an external device provides the further sensor information. The external device is, for example, a server, a cloud-server, a backend, a road edge unit, a weather station, another vehicle and/or an infrastructure control unit. The external device may send the further sensor information to the vehicle via a vehicle-to-vehicle or vehicle-to-infrastructure communication. For example, the further sensor information may be camera data of at least a part of the environment of the vehicle captured by a camera of the external device, such as the other vehicle and/or the infrastructure control unit. The infrastructure control unit may comprise a camera. Besides, that external device may provide weather data and/or data on time of day as the further sensor information. Therefore, for example, the weather information and/or the lighting information may be determined by analyzing the further sensor information provided by the external device. Preferably, the further sensor information is provided in addition to the outside information to determine the weather information and/or the lighting information. The determination of the weather information and/or the lighting information is then particularly reliable because it is not based on the outside information alone.

Another embodiment comprises that there is only one single artificial neural network that determines the weather information, the lighting information and the control command. It is hence possible that the further artificial neural network or networks are comprised by the main artificial neural network that determines the control command. Then, for example, only the outside information may be provided to this artificial neural network.

The method is then particularly robust and easy to implement because only one artificial neural network has to be trained and not multiple artificial neural networks.

Another embodiment comprises that the artificial neural network comprises a fusion layer that fuses the features extracted by the three input branches and outputs the control command. This means that the artificial neural network comprises the three branches as well as the fusion layer to solve preferably two tasks, which are the first setting and the second setting. Therefore, the described structure of the artificial neural network, in particular of the CNN, is used to determine the output command. Thus, the method is easily applicable because well-working artificial neural network approaches may be used.

In addition, an embodiment comprises that applying the artificial neural network comprises determining at least one area of interest in the environment of the vehicle. During the application of the artificial neural network, meaning when running the artificial neural network, it is possible that the artificial neural network determines all parts of the environment, which are considered to be of particular interest. Such an area of interest may be, for example, an area with a traffic sign, in particular with a warning sign. Preferably, at least the first input branch contributes to determining the area of interest. Besides, the area of interest may depend on a local weather and/or lighting condition in the environment. Therefore, the second and/or third input branch may contribute to determining the area of interest. The determined areas of interest are important for determining the control command because this control command depends on the area of interest. This is because the control command preferably describes settings to illuminate and/or to change the illumination of the area of interest.

A further embodiment comprises that the area of interest may comprise at least partially an opposing vehicle, a traffic sign, an obstacle and/or a road infrastructure element. For example, the detection of the opposing vehicle may cause a local reduction of the intensity of the emitted light and/or a change of the focus area away from the opposing vehicle to avoid blinding the driver of the opposing vehicle. Therefore, the artificial neural network is trained to detect and consider opposing vehicles. The traffic sign, the obstacle and/or the road infrastructure element may be important for the driver of the vehicle. They may influence his or her next driving maneuver. Therefore, their areas in the environment should be focus areas and/or illuminated with a higher intensity than surrounding areas of the environment. The obstacle is, for example, an object that may block a driving path of a vehicle on a road on which the vehicle is driving. The obstacle may be, for example, a parked vehicle, a building, a wall, a fallen tree, a pedestrian and/or an animal. The road infrastructure element may be, for example, a crossing, a traffic light, a roundabout, an entrance to a parking space and/or a junction. Any one of the listed obstacles and/or road infrastructure element may be, for example, in case of bad lightning conditions, important to be placed into the focus area of the headlight and/or to be illuminated with particularly high intensity. Therefore, the control command determining algorithm is specified to detect at least one of the listed objects and consider it when determining the control command. This further increases the usefulness of the determined control command.

In an example, the vehicle is driving on a road and approaches a crossing by clear sight at night. There is a traffic sign to indicate that this crossing is nearby. However, the driver may have difficulties to see the traffic sign due to the lighting conditions at night. However, it may be important for the driver to have a better look at the traffic sign. Therefore, the headlight device may adapt its focus area to cover the traffic sign and/or adapt the intensity of light that is emitted towards the traffic sign. However, in another example an opposing vehicle is detected when driving on a road with fog. Consequently, the intensity of light emitted by the headlight device in direction of the opposing vehicle may be reduced to avoid blinding the driver of the opposing vehicle. Besides, the focus area may be changes so that it leaves out the opposing vehicle and only focuses on the road ahead of the vehicle. There, the intensity of the light may be locally increased due to the fog. However, in another example, there is a dark area in the environment of the vehicle that is badly illuminated by the headlight device and/or an external light source. Then, the control command may comprise a setting to increase the intensity and/or to focus the dark area with the headlight device. It is hence possible to perform versatile and specific adjustments of the headlight device based on the outside information, the weather condition and the lighting condition.

Moreover, according to another embodiment, the provided outside information describes the single frame captured by a front camera of the vehicle. The outside information is, in particular, a picture and hence an image taken by a vehicle camera. The frame is, for example, the last captured image of the camera. It is hence a current frame. Based on this one image of the environment, the control command is determined. The method is hence intended for life-adjustment of the headlight device according to the determined control command. The method is hence preferably repeated continuously, for example, in predetermined time intervals. However, previously determined control commands may be considered, meaning that control commands from the previous second and/or seconds may influence the determination of the current control command.

Another embodiment comprises that the provided outside information describes multiple frames captured by a front camera of the vehicle within a last second. In particular, the outside information comprises a predetermined number of frames. For example, if the camera captures up to 30 frames per second, the method may comprise choosing 10 or 15 of these frames, for example every third or every second captured frame of the frames captured within the last second. For example, all these frames are provided to or are fed into the respective branch of the artificial neural network. As a result, a more accurate and/or detailed result of the control command determining algorithm is provided.

The front camera of the vehicle may be positioned centrally at an upper end of a windshield of the vehicle when viewed in height direction of the vehicle. The front camera may comprise means for analysis, such as a control unit to process the captured frames or images. However, the front camera may transmit the captured outside information to the control device that performs the method. Therefore, the front camera is here configured to provide raw data to the control device of the vehicle. Alternatively or additionally, the front camera may be positioned at a front end of the vehicle, for example in a front bumper. Alternatively or additionally, the front camera may be a surrounding view camera of the vehicle. The front camera provides hence useful data describing at least the environment that the headlight device may directly influence.

The above-described artificial neural network can be understood as a software code or a compilation of several software code components, wherein the software code may comprise several software modules for different functions, for example one or more encoder modules and one or more decoder modules.

The artificial neural network can be understood as a non-linear model or algorithm that maps an input to an output, wherein the input is given by an input feature vector or an input sequence and the output may be an output category for a classification task or a predicted sequence.

For example, the artificial neural network may be provided in a computer-readable way, for example, stored on a storage medium of the vehicle, in particular of the control device.

The artificial neural network comprises several modules including an encoder module and at least one decoder module. These modules may be understood as software modules or respective parts of the neural network. A software module may be understood as software code functionally connected and combined to a unit. A software module may comprise or implement several processing steps and/or data structures.

The modules may, in particular, represent neural networks or sub-networks themselves. If not stated otherwise, a module of the neural network may be understood as a trainable and, in particular, trained module of the neural network. For example, the neural network and thus all of its trainable modules may be trained in an end-to-end fashion before the method is carried out. However, in other implementations, different modules may be trained or pre-trained individually. In other words, the method according to the invention corresponds to a deployment phase of the artificial neural network.

Another aspect of the invention relates to a vehicle. The vehicle is configured to perform the above-described method. The vehicle is preferably a motor vehicle, such as a passenger car, a truck, a bus, a motor cycle and/or a moped.

Another aspect of the invention relates to a control device of a vehicle. The control device is configured to perform the steps of the above-described method, in particular the steps that are not performed explicitly by the front camera. Preferably, the control device receives the outside information and/or the further sensor information. Therefore, it provides the outside information and/or the further sensor information for further processing, determines the control command and operates the headlight device accordingly. It is possible that the control device provides commands for the front camera to capture the outside information.

The control device is a computing unit. The control device may in particular be understood as a data processing device, which comprises processing circuitry. The control device can therefore in particular process data to perform computing operations. This may also include operations to perform indexed accesses to a data structure, for example a look-up table, LUT.

In particular, the control device may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The control device may also include one or more processors, for example one or more microprocessors, one or more central processing units, CPU, one or more graphics processing units, GPU, and/or one or more signal processors, in particular one or more digital signal processors, DSP. The control device may also include a physical or a virtual cluster of computers or other of said units.

In various embodiments, the control device includes one or more hardware and/or software interfaces and/or one or more memory units. The memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

Another aspect of the invention relates to a headlight system for a vehicle. The headlight system comprises a headlight device, such as headlights or headlamps of a vehicle, a front camera, and a control device as described above. The headlight system is configured to perform the above-described method. It performs the method.

A further aspect of the invention relates to a computer program product. The computer program product is a computer program. The computer program product comprises instructions which, when the program is executed by a computer, such as the control device of the vehicle, cause the computer to perform the steps of the method for the control device and hence the inventive method.

Further features of the invention are apparent from the claims, the figures and the description of figures. The invention includes combinations of the described embodiments. The embodiments described in context with the method according to the invention, individually as well as in combination with each other, apply accordingly, as far as applicable, to the inventive vehicle, the inventive control device, the inventive headlight system and the inventive computer program product.

The figures show:
- Fig. 1: a schematic representation of a vehicle with an adaptive headlight system; and
- Fig. 2: a schematic representation of a method to operate an adaptive headlight device of a vehicle.

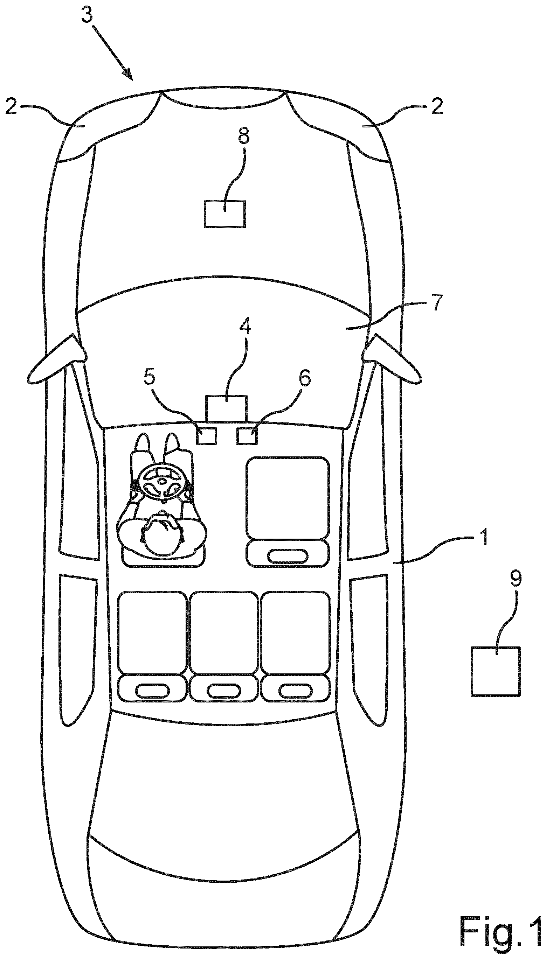

Fig. 1 shows a vehicle 1 comprising an adaptive headlight device 2. The headlight device 2 comprises here two headlights or headlamps in a front area of the vehicle 1. With the means of the headlight device 2, an environment 3 of the vehicle 1 may be illuminated. The environment 3 is here located in front of the vehicle 1 in a forward direction of the vehicle 1 and hence adjacent to the front area of the vehicle 1.

The vehicle 1 comprises a front camera 4 configured to capture the environment 3. The front camera 5 is here located at an upper central position of a windshield 7 of the vehicle 1 when viewed in a height direction of the vehicle 1. Besides, the vehicle 1 may comprise further sensor devices such as a rain sensor 5 and/or a temperature sensor 6. These two further sensor devices may be configured to provide further sensor data about the weather in the environment 3 of the vehicle 1.

The vehicle 1 comprises a control device 8 that may be alternatively referred to as a computing device or as a control unit.

An external device 9 may provide data, such as a further sensor information, for the vehicle 1, for example, via vehicle-to-infrastructure communication and/or vehicle-to-vehicle communication. The external device 9 may be server, a cloud-server, a backend, a road edge unit, a weather station, another vehicle 1 and/or an infrastructure control unit.

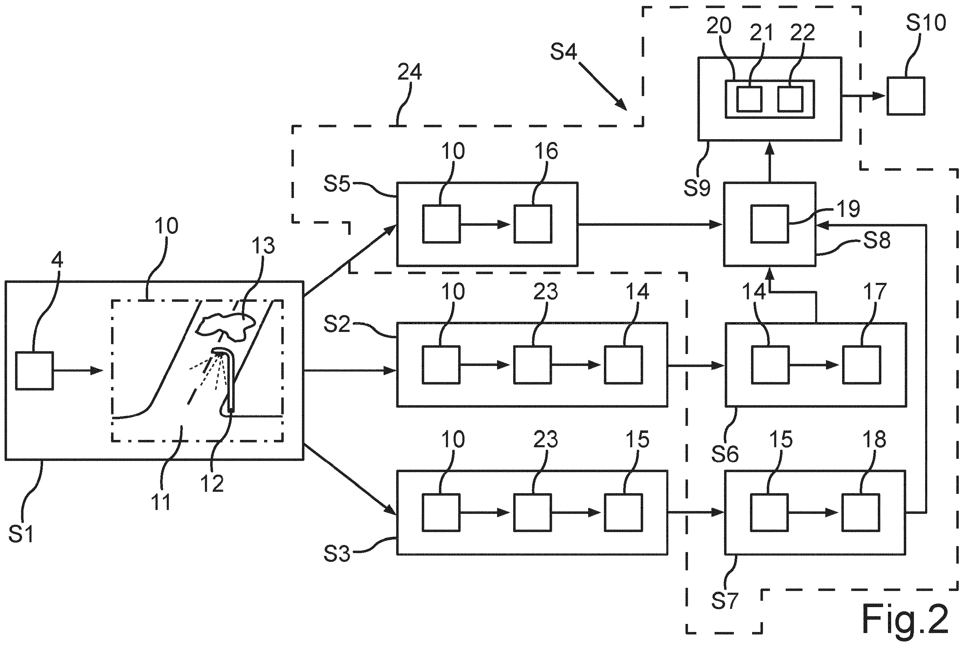

Fig. 2 shows steps of a method to operate the adaptive headlight device 2 of the vehicle 1. In general, a headlight system that comprises at least the headlight device 2, the control device 8, and the front camera 5 may perform the method.

The method may comprise in a step S1 that the front camera 4 of the vehicle 1 captures an outside information 10. The outside information 10 describes the environment 3 of the vehicle 1. Here, as an example, the outside information 10 shows a road 11 on which the vehicle 1 is currently driving. This road 11 is illuminated by a light source 12 such as a streetlamp. The vehicle 1 is here driving at night so that the light source 12 is switched on. Besides, there is currently fog 13 on the road 11. Therefore, the side of a driver of the vehicle 1 is limited and relative bad.

The method comprises providing the outside information 10, for example, by the control device 8. Besides, it comprises providing a weather information 14 describing a weather condition in the environment 3, and a lighting information 15 describing a lighting condition in the environment 3. The weather information 14 as well as the lighting information 15 may be determined in steps S2 and S3. In step S2, the outside information 10 may be provided to a further artificial neural network 23 to determine the weather information 14. In step S3, the outside information 10 may be provided to another or the same further artificial neural network 23 to determine the lighting condition 15.

In a step S4, the outside information 10, the weather information 14 and the lighting information 15 are all provided to an artificial neural network 24, so that this artificial neural network 24 determines a control command 20 for the headlight device 2. Therefore, the artificial neural network 24 is applied on the provided outside information 10, the provided weather information 14 and the provided lighting information 15. The determined control command 20 describes at least one setting 21, 22 for the headlight device 2 by which light emitted by the headlight device 2 is adjusted to the environment 3, the weather condition and the lighting condition. The control command 20 may comprise or describe a first setting 21 by which a focus area of the light is adjusted and/or a second setting 22 by which an intensity of the light is adjusted.

The artificial neural network 24 is preferably a convolutional neural network (CNN), in particular, a multi-branch CNN. Further sub-steps of step S4 are possible which are here indicated as steps S5 to S9. The artificial neural network 24 may comprise three separate input branches 16, 17, 18 for feature extraction. The provide outside information 10 is provided to a first input branch 16 of the three input branches 16, 17, 18 in step S5. The provided weather information 14 is provided to a second input branch 17 in step S6, and the lighting information 15 is provided to a third input branch 18 of the three input branches 16, 17, 18 in step S7. The second input branch 17 and/or the third input branch 18 are preferably fed with data determined by the further artificial neural networks 23. To determine the weather information 14 and/or the lighting information 15, the respective further artificial neural network 23 may be applied on the provided outside information 10 and/or on the further sensor information. The further sensor information may be provided by the rain sensor 5, the temperature sensor 6 and/or by the external device 9. There may be only one single artificial neural network 24 that determines the weather information 14, the lighting information 15 and the control command 20. Otherwise, the artificial neural network 24 and the two further artificial neural networks 23 differ from each other.

The artificial neural network 24 may comprise a fusion layer 19 that fuses the features extracted by the three input branches 16, 17, 18 in step S8 and outputs the control command 20 in step S9.

A step S10 comprises operating the headlight device 2 according to the determined control command 20.

Applying the artificial neural network 24 may comprise determining at least one area of interest in the environment 3 of the vehicle 1. The area of interest may comprise at least partially an opposing vehicle 1, a traffic sign, an obstacle and/or a road infrastructure element. It is hence possible to define which area in the environment 3 should be more or less illuminated than at a current point in time.

In case of the outside information 10 as sketched here, the control command 20 may describe an increase in the intensity of the emitted light to better illuminate the road 11 because of the fog 13. However, for example, less illumination and hence a focus area of the light may be distant from the light source 12 and hence focus more on the part of the environment 3 that is not or less illuminated by the light source 12. If there is, for example, a traffic sign nearby, the focus area could comprise a location of the traffic sign.

In general, the provided outside information 10 may describe a single frame captured by the front camera 4 and/or multiple frames captured by the front camera 4 within a last second. Preferably, the multiple frames are limited to a predetermined number of frames. Preferably, the same single frame and/or the same multiple frames are used in steps S2, S3 and/or S3, meaning that the same outside information 10 is fed into the first input branch 16 and into the further neural networks 23 to determine the weather information 14 and/or the lighting information 15. This means that, for example, based on one single frame captured by the front camera 4, it is possible to determine the control command 20.

In summary, a deep learning visual perception for adaptive headlight control using front camera, weather and lighting condition has been described. Adaptive headlights such as the headlight device 2 ensure more safety and intuitive control. Therefore, the front camera 4 for finding important areas based on the scene (environment 3), weather condition extracted from the front camera image (outside information 10) and lighting conditions extracted from the front camera image (outside information 10) are used. This means that the outside information 10, the weather information 14 and the lighting information 15 are used. By fusing all these input information, the intuitive adaptive headlight control is provided in terms of predicting the focus area of the headlight device 2 and/or the intensity of the headlight device 2 meaning the first and second setting 21, 22.

A sequence of frames or a single frame of the front camera 4 is used as well as the weather condition extracted from the front camera frames and the lighting condition extracted from the front camera frames. As an output, predictions of focus of light and intensity of light are given (settings 21, 22). The artificial neural network 24 consists of the three input branches 16, 17, 18 to extract features from each input followed by the fusion layer 19 to fuse all features together in a learnable way and finally an output layer that predicts the emitted light and hence by outputting the control command 20.

Benefits of the invention are that the adaptive headlight device 2 ensure a higher safety and intuitive control for the driver. It may make use of only the front camera 5 to enable accurate predictions and intuitive adaptive headlight control. The invention is feasible while being easy to train for accurate predictions of the tasks. It can also prevent Troxler's effect on the driver of the opposing vehicle 1 while not compromising the road's illumination for the driver on board and hence in the vehicle 1. This may be achieved by considered the opposing vehicle 1 as not part of the area of interest.

## Claims

1. Method to operate an adaptive headlight device (2) of a vehicle (1) comprising:
- providing an outside information (10) describing an environment (3) of the vehicle (1);
- providing a weather information (14) describing a weather condition in the environment (3);
- providing a lighting information (15) describing a lighting condition in the environment (3);
- determining (S4) a control command (20) for the headlight device (2) by applying an artificial neural network (24) on the provided outside information (10), weather information (14) and lighting information (15), so that the determined control command (20) describes at least one setting (21, 22) for the headlight device (2) by which light emitted by the headlight device (2) is adjusted to the environment (3), the weather condition and the lighting condition; and
- operating (S10) the headlight device (2) according to the determined control command (20).

2. Method according to claim 1, wherein the determined control command (20) describes a first setting (21) by which a focus area of the light is adjusted and/or a second setting (22) by which an intensity of the light is adjusted.

3. Method according to claim 1 or 2, wherein the artificial neural network (24) is a convolutional neural network.

4. Method according to claim 3, wherein the artificial neural network (24) comprises three separate input branches (16, 17, 18) for feature extraction, wherein the provided outside information (10) is provided (S5) to a first input branch (16) of the three input branches (16, 17, 18), the provided weather information(14) is provided (S6) to a second input branch (17) of the three input branches (16, 17, 18) and the provided lighting information (15) is provided (S7) to a third input branch (18) of the three input branches (16, 17, 18).

5. Method according to claim 4, wherein the second input branch (17) and/or the third input branch (18) is fed with data determined by a further artificial neural network (23) that is applied (S2, S3) on the provided outside information (10) and/or on a further sensor information to determine the weather information (14) or the lighting information (15), respectively.

6. Method according to claim 5, wherein a rain sensor (5) and/or a temperature sensor (6) of the vehicle (1) and/or an external device (9) provide the further sensor information.

7. Method according to claim 5 or 6, wherein one single artificial neural network (24) determines the weather information (14), the lighting information (15) and the control command (20).

8. Method according to any one of claims 4 to 7, wherein the artificial neural network (24) comprises a fusion layer (19) that fuses (S8) the features extracted by the three input branches (16, 17, 18) and outputs (S9) the control command (20).

9. Method according to any one of the preceding claims, wherein applying the artificial neural network (24) comprises determining at least one area of interest in the environment (3) of the vehicle (1).

10. Method according to claim 9, wherein the area of interest comprises at least partially an opposing vehicle (1), a traffic sign, an obstacle and/or a road infrastructure element.

11. Method according to any one of the preceding claims, wherein the provided outside information (10) describes a single frame captured by a front camera (4) of the vehicle (1).

12. Method according to any one of the preceding claims, wherein the provided outside information (10) describes multiple frames captured by a front camera (4) of the vehicle (1) within a last second, in particular a predetermined number of frames.

13. Vehicle (1) configured to perform a method according to any one of the preceding claims.

14. Headlight system for a vehicle (1) comprising an adaptive headlight device (2), a front camera (4), and a control device (8), wherein the headlight system is configured to perform a method according to any one of the claims 1 to 12.

15. Computer program product comprising instructions which, when the program is executed by a computer, cause the computer to carry out a method according to any one of the claims 1 to 12.
